Europäisches Patentamt

European Patent Office

Office européen des brevets

(11) Publication number: **0 189 623**
**B1**

(12) **EUROPEAN PATENT SPECIFICATION**

(45) Date of publication of patent specification: **19.07.89**

(21) Application number: **85302629.2**

(22) Date of filing: **15.04.85**

(51) Int. Cl.⁴: **B 27 K 3/15**

(54) **Method of preserving wood by impregnation.**

(30) Priority: **30.07.84 US 635868**

(43) Date of publication of application:
**06.08.86 Bulletin 86/32**

(45) Publication of the grant of the patent:
**19.07.89 Bulletin 89/29**

(84) Designated Contracting States:
**AT BE CH DE FR GB IT LI LU NL SE**

(56) References cited:
**CA-A-1 187 255**
**FR-A-1 475 476**
**GB-A- 756 685**
**GB-A-1 023 465**
**GB-A-1 136 082**

(73) Proprietor: **Bell Canada**
**1050 Beaver Hall Hill**
**Montreal Quebec H3C 3G4 (CA)**

(72) Inventor: **Trumble, William Patrick**
**30 Leacock Lane**
**Kanata Ontario K2K 1R5 (CA)**

(74) Representative: **Crawford, Andrew Birkby et al**
**A.A. THORNTON & CO. Northumberland House**
**303-306 High Holborn**
**London WC1V 7LE (GB)**

## Description

This invention relates to the preservation of wood, particularly wood poles such as are used for telecommunications and electric power cables.

Telephone and other poles are conventionally treated with chrome copper arsenate-type preservatives. However a problem with such preservatives is that they tend to harden the outer portion of a pole, the sapwood. This creates problems for servicing personnel who climb poles using climbing spurs clamped to their boots. The hard sapwood restricts entry of spurs. Also checking of the wood can occur.

The present invention relates to the modifying of such chrome copper arsenate solutions to avoid, or at least reduce, the hardening of the sapwood and thus improve pole climability.

From experience it has been found, as stated above, that the chrome copper arsenate treatment tends to make the surface of treated poles harder than the corresponding white stock, or untreated stock. It has been found that hard surface poles have a higher concentration of chrome ion near the surface than in other areas of the radial cross-section of the pole. The chrome is the apparent reason for the hardening phenomenon, as ammoniacal copper arsenate and acid copper arsenate do not appear to harden the wood as much as chrome copper arsenate does. Neither the reason for the chrome concentration at the surface nor why this causes hardening of the wood is fully understood.

There appear to be at least plausible reasons for the high concentration of the preservative salts at the surface of the wood. One reason is that the outerwood, or sapwood, is more porous than the inner wood, or heartwood. Because of its porosity, the sapwood is more capable of holding a solution than is the heartwood and the chrome reacts with the reactive sites in the wood material matrix. Another possible reason for the high concentration of chrome is that hexavalent chrome oxide is so reactive with the sugars and other materials in the sapwood that the combination forms a semi-solid product that blocks further penetration of preservative into the wood matrix.

The actual mechanism of the hardening of the pole surface is even more obscure than the mechanism of concentration of chrome ion. One theory is that the chrome oxide converts some of the lignin and sugars to a water soluble compound, which is then extracted from the wood, in a manner similar to weathering. The remaining cellulose-lignin composite then shrinks resulting in a case hardening mechanism. Another theory is that chrome oxide reacts to polymerize the lignin phase of the cellulose-lignin composite to form a cellulose-chrome lignin composite that is harder than the original composite. Neither of these theories are proven, but it has been found that these two reactions can take place.

We have now found that the problem referred to above can be substantially mitigated by adding polyethylene glycol, preferably having a molecular weight of from 500 to 2000, to such chrome copper arsenate preservative solutions. British Patent Specification 756685 describes a method of preserving wood by impregnating it with solutions. dispersions or emulsions of insecticidal or fungicidal agents or both, which comprises adding to the solution, dispersion or emulsion a water-soluble polyalkylene glycol having a molecular weight of at least 200 or a lower alkyl ether thereof as described in the specification. There is no specific disclosure in this specification of the addition of such a polyalkylene glycol to a preservative solution containing chrome, copper and arsenate salts. Indeed, such an addition is contraindicated because it causes destabilisation of the solution with precipitation of the chromate unless the temperature and pH of the solution are controlled in a manner we have devised.

According to the present invention, there is provided a method of preserving wood by impregnation with an aqueous solution containing chrome, copper and arsenate salts and polyethylene glycol, characterised in that

(i) the solution contains from 2.0 to 2.5% by weight of the chrome, copper and arsenate salts,

(ii) the said salts are present in the relative proportions, per 100 parts by weight of said salts, of 44.5 to 50.5 parts by weight of hexavalent chromium, calculated as $CrO_3$, 17.0 to 21.0 parts by weight of copper, calculated as $CuO$, and 30.0 to .38.0 parts by weight of arsenic, calculated as $As_2O_5$,

(iii) the solution contains from 0.5 to 10% by weight of the polyethylene glycol, and

(iv) the solution is formed by adding the polyethylene glycol slowly to an aqueous solution of the said salts while maintaining the latter at a temperature of from 21° to 29°C (70° - 85°F) and the pH at from 1.7 to 2.0.

The basic solution used is a standard Chromated Copper Arsenate, as specified in the ASTM standard D1625-71. This solution is referred to as CCA (chromated copper arsenate) and the preferred example is Type C. The composition of this solution is as follows: hexavalent chromium, calculated as $CrO_3$, 44.5 - 50.5%; bivalent copper, calculated as $CuO$, 17.0 - 21.0%; pentavalent arsenic. calculated as $As_2O_5$, 30.0 - 38.0%. The nominal composition is considered to be 47.5% $CrO_3$, 18.5% $CuO$ and 34% $As_2O_5$. This standard solution is well known and widely used.

The basic solution is diluted by the addition of water to make a 2% - 2.5% standard waterbased solution, by adding 40 to 50 parts of water to one part of solution. This again is a well known standard solution for wood treatment. In a particular embodiment, to the standard water-based solution is added a 10% concentration of polyethylene glycol having a molecular weight of 1000 (PEG 1000).

It had previously been proposed to add fatty acids to the standard water-based solution. However these additives did not prove satisfactory. It was found that the chromium in the solution attacked the fatty acids and the additive was precipitated. On application to wood, the additive stays at or near the surface and is eventually leached away by rain.

It was thought that the same result would occur when a polyethylene glycol (PEG) was added, with the likelihood that the chromium would also precipitate. Experts in the field of wood preservation were doubtful as to the possibility of producing a stable wood preserving solution by adding polyethylene glycol to a standard CCA solution and were not, in fact, able to do so.

However, it is possible to produce a stable solution if the PEG is added to the standard waterbased CCA solution slowly and steadily in order to obtain even distribution. The solution is maintained at a temperature of from 21° - 29°C (70° - 85°F), preferably about 24°C (75°F) and at a pH of from 1.7 to 2.0. Under these conditions reaction between the chromium and the PEG is minimized.

It is believed that the PEG acts as a "moisturizer" for the wood matrix and as a buffer for the chrome oxide to retard its aggressive chemical reactivity to wood sugars, lignins etc. The moisturizing action of the PEG occurs in that the PEG fills the pores of the wood and then attracts and binds water to its own matrix. This is believed to impart softening to the outer surface of the wood, provide some lubricity for climbing spurs and at least reduce checking or splitting in the pole.

The poles are treated with the modified CCA solution in the conventional way, that is by positioning in a chamber which is first evacuated to extract as much air as possible and then pressurizing with the treatment solution.

## Claims

1. A method of preserving wood by impregnation with an aqueous solution containing chrome, copper and arsenate salts and polyethylene glycol, characterised in that

   (i) the solution contains from 2.0 to 2.5% by weight of the chrome, copper and arsenate salts,

   (ii) the said salts are present in the relative proportions, per 100 parts by weight of said salts, of 44.5 to 50.5 parts by weight of hexavalent chromium, calculated as $CrO_3$, 17.0 to 21.0 parts by weight of copper, calculated as $CuO$, and 30.0 to 38.0 parts by weight of arsenic, calculated as $As_2O_5$,

   (iii) the solution contains from 0.5 to 10% by weight of the polyethylene glycol, and

   (iv) the solution is formed by adding the polyethylene glycol slowly to an aqueous solution of the said salts while maintaining the latter at a temperature of from 21° to 29° C (70° - 85° F) and the pH at from 1.7 to 2.0.

2. A method according to claim 1, in which the polyethylene glycol has a molecular weight of from 500 to 2000.

## Patentansprüche

1. Verfahren zur Holzkonservierung durch Imprägnieren mit einer Chrom-, Kupfer- und Arsenat-salze und Polyethylenglykol enthaltenden, wässrigen Lösung, dadurch gekennzeichnet, daß

   (i) die Lösung von 2,0 bis 2,5 Gew.-% der Chrom-, Kupfer- und Arsenat-salze enthält,

   (ii) diese Salze in relativen Anteilen, pro 100 Gew.-Teile dieser Salze, von 44,5 bis 50,5 Gew.-Teilen sechswertigem Chrom, berechnet als $CrO_3$, 17,0 bis 21,0 Gew.-Teilen Kupfer, berechnet als $CuO$, und 30,0 bis 38,0 Gew.-Teilen Arsen, berechnet als $As_2O_5$, vorhanden sind,

   (iii) die Lösung von 0,5 bis 10 Gew.-% Polyethylenglykol enthält, und

   (iv) die Lösung durch langsame Zugabe des Polyethylenglykols zu einer wässrigen Lösung dieser Salze unter Halten der letztgenannten auf einer Temperatur von 21° bis 29°C (70°-85°F) und des pH auf 1,7 bis 2,0 hergestellt wird.

2. Verfahren nach Anspruch 1, bei welchem das Polyethylenglykol ein Molekulargewicht von 500 bis 2000 besitzt.

## Revendications

1. Procédé de préservation du bois par imprégnation avec une solution aqueuse contenant des sels de chrome, de cuivre et d'arséniate et du polyéthylèneglycol, caractérisé en ce que:

   (a) la solution contient de 2.0 à 2,5 % en poids des sels de chrome, de cuivre et d'arséniate,

   (b) les sels sont présents dans les proportions relatives, pour 100 parties en poids des sels, de 44,5 à 50,5 parties en poids de chrome hexavalent, calculé sous forme de $CrO_3$, de 17,0 à 21,0 parties en poids de cuivre, calculé sous forme de $CuO$, et de 30,0 à 38,0 parties en poids d'arsenic, calculé sous forme de $As_2O_5$,

   (c) la solution contient de 0,5 à 10 % en poids de polyéthylèneglycol; et

   (d) la solution est obtenue en ajoutant lentement le polyéthylèneglycol à une solution aqueuse des sels tout en maintenant cette dernière à une température comprise entre 21° et 29°C et le pH réglé entre 1,7 et 2,0.

2. Procédé selon la revendication 1, dans lequel le polyéthylèneglycol a une masse moléculaire comprise entre 500 et 2000.